# EUROPEAN PATENT APPLICATION

(11) **EP 0 672 589 A1**
(43) Date of publication of application: **20.09.1995**
(21) Application number: 94870049.7
(22) Date of filing: 18.03.1994
(51) Int. Cl.: B65D 21/02, A01G 9/02

(54) **Stackable flowerpot**

(71) Applicant: THOVADEC, B-9070 Destelbergen (BE)
(72) Inventor: Van de Velde, Luc, B-9230 Wetteren (BE)
(74) Representative: Pieraerts, Jacques

(57) **Abstract**

A stackable flowerpot characterized in that it has a protrusion (3) in the base (1) pointing upwards, while the inside of this protrusion is fitted with stacking ridges (4).

## Description

The present invention relates to a flowerpot, more particularly a flowerpot made of synthetic material, paper, card, agglomerates or similar materials with technically equivalent properties. In the present case the words "synthetic material" refer to materials that lend themselves to injection, pouring, deep-drawing and the like.

It is the object of the present invention to prescribe a stackable flowerpot that does not have the disadvantages of existing stackable flowerpots.

Indeed many different solutions have been proposed, most of which still present difficulties. Hence it has been proposed that radially protruding vanes or ridges should be fitted on the inside of the base of the pot. These do provide the desired solution when stacking, but they also have the very considerable disadvantage of forming obstacles to the roots or rootlets that develop in a circular pattern along the inside wall of the pot. Hindering the growth of these roots has an extremely unfavourable effect on the growth of plants.

It has also been proposed that similar supporting ridges should be fitted in the region of the top edge of the flowerpot. These very thin ridges or vanes extending radially inwards cause injuries to those who handle large numbers of such pots every day. This is mainly due to repeated contact between fingers and the fairly sharp edges of these ridges or vanes.

According to the invention, said disadvantages are now remedied by the fact that the flowerpot according to the invention has an upward protrusion in its base, with stacking ridges fitted in the inside of this protrusion.

Other details and advantages of the invention will become apparent from the further description of a stackable flowerpot according to the invention. This description is given exclusively as an example and does not restrict the invention thereto. The references relate to the attached figures.

Figure 1 is a side view of two flowerpots stacked one on top of the other.

Figure 2 shows, at an extremely enlarged scale, the central part of the bases of two stacked flowerpots according to the invention.

In the following description of the stackable flowerpot according to the invention, expressions such as "upwards" or "downwards" must be understood in terms of the position of the stackable flowerpot when it is in use. The base of the flowerpot is hence considered to be that part of the flowerpot which faces downwards.

The stackable flowerpot according to the invention can, as has already been stated in the introduction, certainly be manufactured from a synthetic material, which is taken to mean any material that can be poured, injected or deep-drawn, and also from card, paper, agglomerates and similar materials with technically equivalent properties, giving a thin-walled flowerpot that can be stacked for further manual handling or transferred by machine to a planting, slipping or re-potting installation.

Flowerpots made of thin-walled materials, mainly but not exclusively of synthetic materials, stick to each other easily when stacking, and solutions have been proposed in order to prevent this. Some of these have been set out in the introduction.

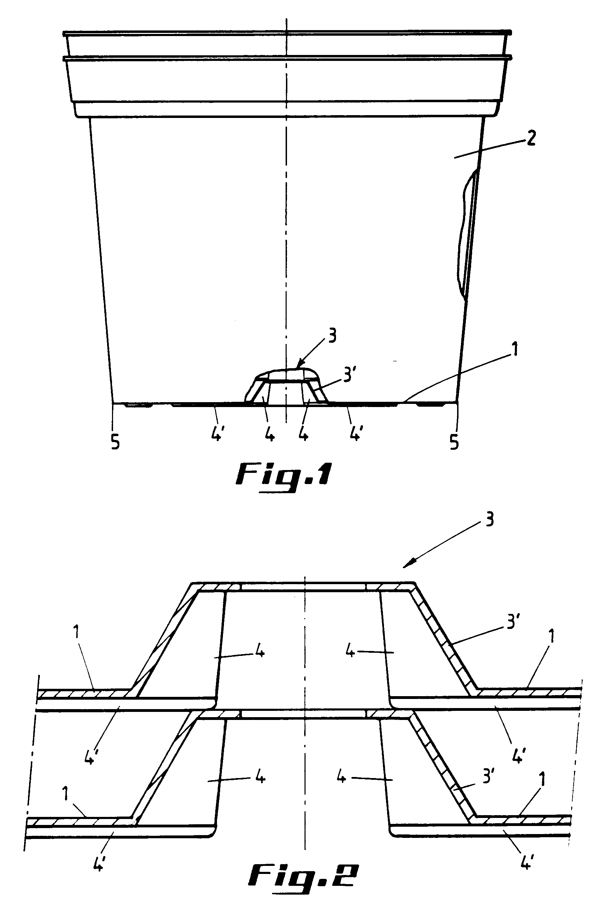

The flowerpot according to the invention provides a novel and original solution, which consists of fitting the base 1 of a flowerpot 2 (figure 1) with a central protrusion 3. The word "protrusion" is taken to mean the local elevation in the base 1 of the flowerpot. The wall 3' of this central protrusion 3 preferably runs upwards, which is intended mainly for reasons associated with removing the manufactured flowerpot from the pouring or injection mould.

In order to make it possible to stack the flowerpots without having to cope with the difficulties that have been described above or with other well-known problems, the protrusion 3 has stacking ridges 4 along its inside.

In a preferred embodiment the stacking ridges 4 extend radially, but other profiles are also possible. The stacking ridges could be in the form of circles or limited to supporting feet. The radial stacking ridges as illustrated in the figures should therefore be considered only as a possible embodiment.

From under the base 1 of the flowerpot 2 there are also ribs 5' extending from at least part of the base.

If the ribs 5' do not reach to the edge of the flowerpot, the base of the flowerpot is supported locally by supports 6 (figure 1). These are exclusively intended to provide firm and stable support to the flowerpot. They may take the form of arcs.

This solution, namely the provision of at least one protrusion 3 with stacking ridges 4 and ribs 5' hence also makes it possible to add water to the flowerpot and to remove the water according to the well-known ebb and flow system.

As is very apparent from figure 2, the stacking of flowerpots can now take place without the feared obstacles to circular root growth of plants. The base of the flowerpot according to the invention and its adjoining wall remain completely smooth. Stacking takes place without having to resort to supporting ridges protruding into the inside of the flowerpot at the top, which can cause injuries to people who handle hundreds of flowerpots every day.

It is clear that the principle described here also applies to non-circular flowerpots and that the number of protrusions is not necessarily limited to a central raised section.

## Claims

1. Stackable flowerpot, characterized in that it has a protrusion (3) in the base (1) pointing upwards, while the inside of this protrusion is fitted with stacking ridges (4).

2. Flowerpot according to the preceding claim 1, characterized in that said stacking ridges (4) extend radially downwards.

3. Flowerpot according to claim 1, characterized in that said stacking ridges (4) form a circle.

4. Flowerpot according to claim 1, characterized in that said stacking ridges (4) form local supports.

5. Flowerpot according to any of the claims 2 - 4, characterized in that, under the base of the flowerpot near the circumference of the flowerpot, ribs (5') extend from part of the base (1) in order to support the flowerpot, which latter has at least local supports (6) at least along its circumference, the height of which corresponds to the height of said ribs (5').
